Europäisches Patentamt

European Patent Office

Office européen des brevets

(19)

(11) Publication number: **0 496 477 A2**

# EUROPEAN PATENT APPLICATION

(12)

(21) Application number: **92200942.8**

(22) Date of filing: **16.04.87**

(51) Int. Cl.5: **H04N 5/782**

This application was filed on 02 - 04 - 1992 as a divisional application to the application mentioned under INID code 60.

(30) Priority: **18.04.86 GB 8609524**

(43) Date of publication of application:
**29.07.92 Bulletin 92/31**

(60) Publication number of the earlier application in accordance with Art.76 EPC: **0 265 476**

(84) Designated Contracting States:
**DE FR NL**

(71) Applicant: **BRITISH BROADCASTING CORPORATION**
**Broadcasting House**
**London W1A 1AA(GB)**

(72) Inventor: **Sandbank, Charles Peter**
**30 Beech Road**
**Reigate, Surrey(GB)**

(74) Representative: **Abnett, Richard Charles et al**
**REDDIE & GROSE 16 Theobalds Road**
**London WC1X 8PL(GB)**

(54) Improvements relating to video receivers and recorders.

(57) A video recorder comprises electromechanical components (10), electronic circuits (11) and a control unit (12) with which there are associated both front panel controls (13) and a user remote control receiving unit (16) with a sensor to which signals can be sent from a hand-held remote control unit. In addition to these conventional features an off-air controller (18) is provided. This is capable of decoding control signals associated with the television signal and includes an encoder which generates outputs which simulate those from the conventional hand-held remote control unit (16). The off-air controller (18) is preferably within the casing of the video recorder.

FIG.1

EP 0 496 477 A2

The present invention relates to television receivers and to video recorders, commonly known as video tape recorders (VTR) or video cassette recorders (VCR), and in particular to the control of such apparatus.

The essential components of a video recorder are the electromechanical components including the tape drive mechanism, control relays and electromagnets, magnetic heads and head scanning mechanism. Secondly there are the electronic circuits for processing the video signals being recorded or played back. Thirdly there is the control unit which controls the electromechanical components and the electronic circuit. The control unit may be very simple providing just channel selection, record, playback etc., commands, or may be provided with many facilities for scheduled recording, various modes of replay and so on.

In any event, some means of providing control inputs have to be provided and, at the simplest, these may consist solely of front panel controls. However, it is well known to provide domestic video recorders with remote control units which either plug into the recorder or transmit infra-red or ultrasonic control signals to a sensor on the recorder. Television receivers are also well known with remote control units as well as front panel controls to effect channel selection and switch between ON and OFF (standby) conditions.

In the professional field it is known to control recorders by transmitting control signals along with the wanted information signal. The recorder responds appropriately to the received control signals. See for example GB-A-2 126 002, which shows how a video recording and playback unit can be turned on in response to broadcast codes in the signal.

The object of the present invention is to make it possible to add such facilities to domestic receivers and video recorders, in particular as an add on facility for existing receivers and recorders, without the need to re-design the receivers and recorders.

It is known to use a bar code reader responsive to television programme schedule data input by the user to enter programme control data in a programme memory, see GB-A-2 034 995 in respect of receivers and EP-A-0 133 985 and EP-A-0 122 626 in respect of video recorders. The equipment receives control signals accompanying the broadcast signal and compares these with the data in the programme memory to determine the times at which the video recorder is switched ON and OFF. In Nachrichtentechnische Zeitschrift, Vol. 35, No. 6, June 1982 pages 368-376 is described the German ZPS digital TV identification system in which data packets are transmitted with the TV signal, and at a receiver the ZPS data is continuously compared with programme selections previously input by the user. The input can be by means of a light pen and bar code. Preferably the transmitted data includes the scheduled programme time, so that if transmission of the programme is delayed correct recordal by the recorder may still be made.

The present invention in its various aspects is defined in the appended claims to which reference should now be made.

In DE-A-3 355 082 a programming mode is signalled either by a special incoming teletext signal or by the user. The screen then shows a programme schedule with a cursor which may be moved to select for entry into a store the programmes which are to be recorded by the VCR. Similarly to the arrangement in which entry is by means of bar codes, programme selections are thus entered for later matching with received control codes.

In the present invention, the remote control unit and the second control unit can act independently as parallel, alternative means of control. Therefore the second unit can be provided as an add-on facility to an existing video recorder or receiver.

An embodiment of the invention will now be described, by way of example, with reference to the accompanying drawings, in which:-

**Figure 1** shows the main components of a video recorder;

**Figure 2** is a diagram illustrating the physical set-up;

**Figure 3** is a block diagram of an off-air remote controller, and

**Figure 4** shows a known control signal format.

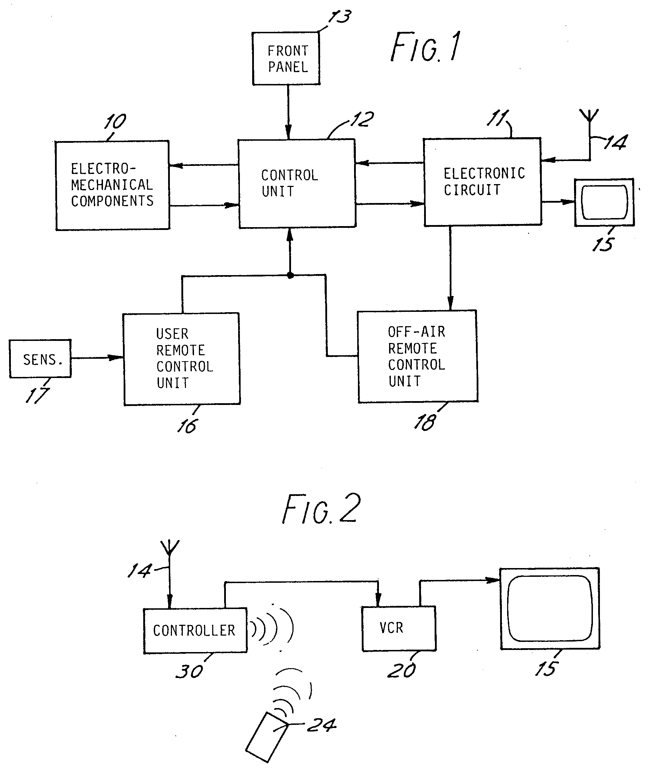

The video recorder shown in Figure 1 comprises electromechanical components 10, electronic circuits 11, and a control unit 12. The input to and output from the electronic circuit are symbolised by an aerial 14 and a television set 15. The control unit 12 is provided with conventional front panel controls 13. The recorder is also provided with a conventional user remote control unit 16 which picks up signals directed on to an infra-red sensor 17 by a hand-held unit with buttons for effecting channel selection, record, playback and so on. The video recorder as so far described represents conventional practice.

The recorder according to the present invention is provided with an off-air remote control unit 18 which can provide output signals (channel selection, record etc.) to the main control unit 12 which are exactly the same as those conventionally provided by the user remote control unit 16. The off-air remote control unit 18 derives its input, via the electronic circuit 11, from the received television signal which is accompanied by data signals, for example signals conforming to the German VPS standards. Such VPS codes are sometimes transmitted in Germany with the broadcast signal to control the operation of recorders remotely.

In Figure 1 the off-air controller unit 18 is shown feeding directly into the main control unit 12. As illustrated in Figure 2, the off- air unit is not built into the video recorder itself but is constructed as a separate controller which passes the control commands to the recorder using the input device on the recorder provided for the hand-held remote control unit. This has the advantage that no modification whatsoever to the recorder is required. In the case of infra-red or ultrasonic remote control systems, the controller radiates control signals to the sensor 17, just like the hand-held unit, which can still be used in the normal way.

In the arrangement of a receiving installation using such a broadcast controller shown in Figure 2, the aerial 14 and the television receiver 15 are connected to the recorder 20 in the conventional manner, except that the aerial signal is preferably "looped through" the separate off-air controller 30 as shown. The television receiver 15, the recorder 20 and the hand-held remote control unit 24 can all be used in the normal way except when the off-air controller 30 responds to codes in the transmitted signal. The controller 30 could be made to respond to signals in the VPS format, but the transmission efficiency and convenience can be improved by using teletext data signals for the control codes.

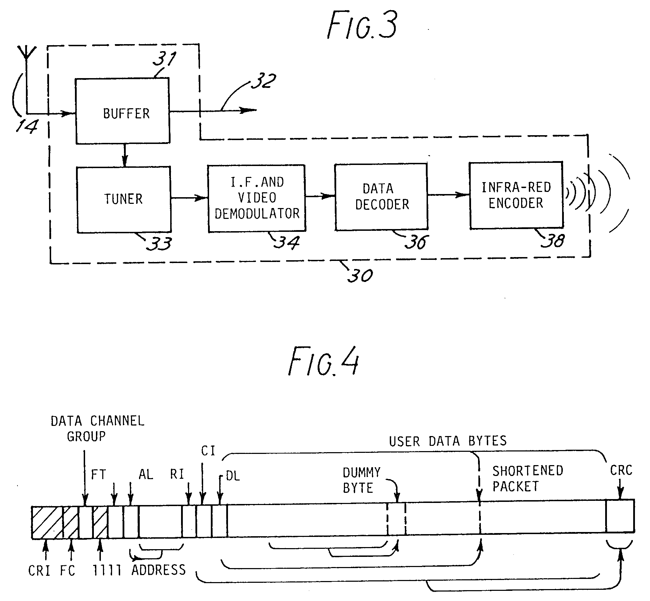

The main units of the off-air controller 30 are shown in Figure 3. Signals from the aerial 14 are buffered in a buffer circuit 31 to provide a "loop-through" output 32 to the recorder 20 and to feed tuner and demodulator stages 33, 34 similar to those of a conventional television receiver. Teletext data signals corresponding to the available remote control functions are extracted from the vertical blanking intervals of the signal by a data decoder 36, and re-encoded in a circuit 38 to produce infra-red (or ultrasonic) signals with the same coding format as those produced by the hand-held controller 24.

If the video recorder uses a hand-held unit connected by wire, the controller 30 is plugged in in place of the hand-held unit 24. This has the disadvantage that the hand-held unit cannot be used when the controller is connected. This problem could be overcome by providing the controller with a plug incorporating a socket for the hand-held unit.

The structure of a suitable teletext data signal (known as Datacast) is shown in Figure 4. This consists of a two-level signal starting with Clock Run-in (CRI) and Framing Code (FC) data in the normal teletext format. Background detail for this system can be found in "BBC Datacast - The Transmission System" from the IERE Conference on Electronic Delivery of Data and Software, September 1986: IERE Conference Publication No. 69, pp. 93-98.

The provision of a separate off-air remote control unit 18 makes it possible for the conventional, domestic video recorder to make use of the data signals, because the unit 30 effectively decodes these signals and converts them to control signals (e.g. channel selection, record) simulating those from the user remote control unit 24. It accordingly becomes possible to switch the recorder on to record by remote control over the air (record command) to select the channel being recorded (channel select command), to terminate recording at the end of a program and so on.

The hand-held remote control unit 24 is usually dedicated to a particular application, that is to say it would emit only one set of control codes matching those for a corresponding video recorder (or television receiver). However, the additional unit 30 could be capable of providing any one of a number of different sets of control signals and have a selector device for "strapping" the unit to provide the required set for a given application. Implementation could largely be in software terms with appropriate codes set up in ROM (read-only memory). Selection could be effected by plugging in different ROMs.

## CROSS REFERENCE

Attention is drawn to European Patent Application No. 87902614.4 (Publication No. EP-A-0265476) from which the present application is divided.

## Claims

1. A video recorder including electromechanical components (10), an electronic circuit (11), a main control unit (12) therefor, and a remote control signal receiving unit (16) for providing control signals to the main control unit, the recorder being provided with a remote control hand-held unit (17) having manually-operable elements thereon and the remote control unit including means for generating coded signals representing the actuated elements and transmitting the coded signals to the remote control receiving unit (16) of the video recorder, the recorder being further provided with a second control unit (18); in which the second control unit comprises means (36,38) responsive to broadcast programme control signals to generate coded signals representing at least channel selection and record commands, which coded signals simulate the coded signals output by the remote control signal receiving unit, and the output of the second control unit is coupled to the main control unit for control thereof.

2. A video recorder according to claim 1, wherein the second control unit is housed within the video recorder.

3. A video recorder according to claim 1 or 2, wherein the second control unit is capable of providing any one of a number of different sets of control signals and comprises a selector device for selecting one such set.

4. A video recorder according to claim 3, wherein the selector device comprises an interchangeable read-only memory device.

5. A video recorder according to any preceding claim, in which the control signals provided to the main control unit by the remote control signal receiving unit represent at least channel selection, record and playback commands.

6. A television receiver including an electronic circuit (11), a main control unit (12) therefor, and a remote control signal receiving unit (16) for providing control signals to the main control unit, the receiver being provided with a remote control hand-held unit (17) having manually-operable elements thereon and the remote control unit including means for generating coded signals representing the actuated elements and transmitting the coded signals to the remote control receiving unit (16), of the receiver, the receiver being further provided with a second control unit (18); in which the second control unit comprises means (36,38) responsive to broadcast programme control signals to generate coded signals representing at least channel selection and record commands, which coded signals simulate the coded signals output by the remote control signal receiving unit, and the output of the second control unit is coupled to the main control unit for control thereof.

7. A television receiver according to claim 6, in which the second control unit is housed within the television receiver.

8. A television receiver according to claim 6 or claim 7, in which the control signals provided to the main control unit by the remote control signal receiving unit represent at least channel selection, and ON/OFF commands.

*FIG.1*

FRONT PANEL *13*

ELECTRO-MECHANICAL COMPONENTS *10*

CONTROL UNIT *12*

ELECTRONIC CIRCUIT *11*

*14*

*15*

SENS. *17*

USER REMOTE CONTROL UNIT *16*

OFF-AIR REMOTE CONTROL UNIT *18*

*FIG.2*

*14*

CONTROLLER *30*

VCR *20*

*15*

*24*

## FIG.3

## FIG.4